# EUROPEAN PATENT SPECIFICATION

(11) **EP 2 123 424 B1**
(45) Date of publication and mention of the grant of the patent: **18.09.2019**
(21) Application number: 07704773.6
(22) Date of filing: 18.01.2007
(51) Int. Cl.: B29C 49/48, B29C 49/36, B29C 55/26, B29D 23/00, B29C 49/04, B29C 49/62

(54) **EQUIPMENT FOR PRODUCING MOLECULARLY BIORIENTED TUBULAR PROFILES AND CORRESPONDING METHOD**
EINRICHTUNG ZUR HERSTELLUNG VON MOLEKULAR BIOORIENTIERTEN RÖHRENFÖRMIGEN PROFILEN UND ENTSPRECHENDES VERFAHREN
ÉQUIPEMENT DE FABRICATION DE PROFILÉS TUBULAIRES À BIORIENTATION MOLÉCULAIRE ET PROCÉDÉ CORRESPONDANT

(43) Date of publication of application: 25.11.2009
(73) Proprietor: Molecor Tecnología S.l., 28529 Madrid (ES)
(72) Inventor: MUÑOZ DE JUAN, Ignacio, E-28529 Madrid (ES)
(74) Representative: Pons Ariño, Angel
(86) International application number: PCT/ES2007/070011
(87) International publication number: WO 2008/087236

(56) References cited:
- EP-A1- 0 434 276
- WO-A1-02/09926
- ES-A1- 8 105 621
- JP-A- H02 131 917
- JP-A- H06 170 932
- US-A- 3 050 786
- US-A- 5 055 024

## Description

### OBJECT OF THE INVENTION

The present invention relates to equipment and corresponding method for producing molecularly oriented tubular profiles, particularly for the application thereof in tubes, signalling elements and light structural elements.

The equipment is based on a mould which incorporates an expansion system, a refrigeration system and another vacuum system, conveniently synchronized to make execution and corresponding production of a molecularly bioriented tube or profile possible.

The object of the invention is that of being able to form molecularly oriented tubular profiles, in an executable process that is easy, quick and energetically efficient, permitting the reduction of costs and times in the production of the tubular profiles with respect to the systems that are currently used for the same purposes, so that the final product arrives on the market at a much more competitive price based on the manufacturing which is achieved by means of the equipment and the method of the invention.

The field of application is included within the manufacturing processes of molecularly oriented profiles and particularly of discontinuous systems.

### BACKGROUND OF THE INVENTION

Molecular biorientation is a process through which, applying a mechanical deformation to a tube or previously extruded pro forma in suitable temperature, pressure, rate of deformation and radius of deformation conditions, mainly, a substantial modification of their mechanical properties, mainly the sigma of the material, resistance to impact, creep improvement, resistance to the propagation of cracks, improvement of the Young module, etc., is produced.

An ultra resistant tube is achieved with said molecular orientation process, with fewer raw materials and with equal or greater performances, thanks to the greater strength of the material.

In order to strengthen the tube tangentially, which is in the direction in which we want to strengthen the material to withstand the pressure, we must radially expand the previously extruded tube, thereby slightly increasing the diameter thereof.

There are various systems for manufacturing tubular profiles, and they can be grouped into two main categories: Continuous, or in-line, systems and discontinuous systems.

Bearing in mind that the equipment and method of the invention are included in the category of the latter, we are mainly going to refer to the discontinuous systems which consist of processes which produce the molecular orientation "element to element" based on an expansion of the tubular pro forma inside a mould which provides the final shape of the tubular profile.

The patents and documents which disclose variants of this system or method are numerous, and we can cite:
- Method based on the following references: FR8115427; US44990495, WO9813190, wherein the hot tube fastens to the ends of the mould inside a tight sheath and is submitted to internal pressure, so that as said sheath is removed by axial slipping, the plastic tube expands radially and sticks to the walls of the cold mould, achieving the cooling of the oriented profile by contact with said cold mould.
   The main characteristics of said method consist in that the mould is symmetrical and is comprised of two concentric bodies which slip one inside the other, the expansion being carried out in two stages and producing the cooling by contact through the walls of the mould.
- Method based on the references US4240344 and GB7932064, wherein the tube is inserted in a symmetrical mould, is heated by passing hot water inside and outside of the plastic pro forma and, when the orientation temperature is reached, the interior pressure is increased and the pro forma expands on the mould. The tube is cooled such as in the previous case by contact with the mould, when it is expanded, i.e. externally and indirectly, with the special feature that the mould is heated first water used to heat the plastic and then the actual mould is cooled to cool the plastic, which gives a very poor energetic performance of the general process.

The first method is carried out by means of moulds formed by systems with internal actuations and mechanisms of certain complexity, so that in the normal operation thereof and due to the fact that they are concentric and that they slide axially, they reach double their length, being an expensive system and with a large necessity of space. Furthermore, the interior sheath which supports the plastic tubular pro forma, to begin with, must be hot, so it is necessary to have an accessory which permits the recirculation of the hot fluid, even further complicating the mould. Likewise, said mould is always kept cold thanks to an exterior bath of refrigerating fluid, while the cooling of the already shaped plastic tube is produced indirectly through the mould and by contact, which results in an inefficient system, energetically speaking, and disadvantageous as regards processing time, given that as the plastic has a coefficient of expansion which is greater than the metal, a separation between the mould and the plastic is produced almost immediately, making the transmission of heat by contact enormously difficult. The expansion is produced in at least two stages, being a slow process which is subject to the displacement of the moving sheath.

Likewise, the entrance and exit of the tubes are made difficult by the sliding accessories, the entrance and the exit of the pro forma and tube being possible solely at the same end, not allowing a linear process, but rather with back and forth movements of the material, this aspect being a factor which slows down the processing time and industrial logistics, as the removal and entrance time of pro formas do not permit the orientation and both actions cannot be carried out simultaneously.

Similarly, thermal performance decreases in the second method, as the mould is heated and cooled each time a tube is processed, which implies a high consumption of energy, resulting in a low efficiency just like in the previous case, since again the cooling is produced by contact. In this method, the tube is inserted cold, the actual mould acting as heater and as mould itself, this featuring numerous orifices to permit the evacuation of the fluid which previously served to heat the tube, making the execution of the method more expensive.

Document US3050786A discloses an equipment for producing molecularly bioriented tubular profiles according to the preamble of claim 1.

### DESCRIPTION OF THE INVENTION

The equipment and method according to the claims 1 and 2 proposed permits the solution of the problems and drawbacks referred to in the previous section, allowing a simple, quick and energetically efficient molecular orientation, the equipment being much less sophisticated expensive than the conventional equipment, which permits a large reduction of costs and processing times and permitting these products to arrive on the market at a much more competitive price.

More specifically, the equipment of the invention comprises a special mould for the shaping of a plastic tube, mould which solely actuates as shaper and at a constant temperature, hot and without requiring heat exchange between said mould and the tube.

Said mould is constantly heated with heating elements and at the ends thereof includes asymmetric heads, allowing the simultaneous insertion and extraction of a pro forma and oriented tube, with the subsequent saving of time in the process, in addition to permitting the use of pre-heated tubes thanks to the asymmetric geometry of said heads.

Said heads, in addition to a vacuum take-off which permits, prior to the shaping, the expansion of the tube or profile without having to make evacuation or drainage orifices in the mould for the fluid which surrounds the plastic tube and confines the mould, incorporate a lubrication system by air cushion or any other fluid, which permits the smooth and ultra quick extraction of the shaped tubes without needing strong mechanical elements.

Furthermore, in the mould, an specifically in the asymmetric heads, mechanical fastening means for the plastic tube and means for the entrance of expander / refrigerating fluids have been provided, including the exit of said fluids.

The plastic tube which is inserted into the mould, through one of the ends, rests on a generatrix on the lower parte of the mould, to subsequently carry out the fastening of the corresponding head to that inlet end, all of that so that the plastic tube enters hot at a temperature which permits the orientation thereof to be deformed, the mould already being hot when the plastic tube is inserted, so no heat exchange is produced between the tube and the wall of the mould and, therewith, of the temperature in the pro forma tube.

On the other hand, the mould is mounted on a support that allows the rotation and/or tilting thereof, in order to improve the cooling process of the corresponding tubular profiles, complementing the equipment with auxiliary measurement and control systems.

Based on this equipment formed by the mould and all of the characteristics associated thereto, the production method is based on the following operative steps:
- Insertion of the plastic tube inside the mould, which has already been heated to prevent any heat exchange between the plastic tube and the wall of the mould.
- Closure of the head corresponding to the end of the mould wherethrough the plastic tube has been inserted and actuation of the fastening means of said plastic tube, so that this remains perfectly fastened and immobilised inside the mould.
- Execution of the vacuum inside the enclosure limited by the interior of the mould and the exterior of the plastic tube.
- Application, by a pumping or pressurised tank system, of expander fluid to the interior of the plastic tube, always at the same temperature of the tube, to produce the expansion thereof against the walls of the mould.
- Application to the interior of the plastic tube of a refrigerating fluid, through a pumping or pressurised tank system and simultaneously an outlet to permit the continuous flow of said refrigerating fluid and the direct interaction thereof against the inner walls of the expanded plastic tube.
- Execution of oscillating and/or rotating movements of the mould during the refrigerating fluid application phase, with the object of ensuring a correct distribution of the temperature in the interior.
- Depressurization and/or emptying of the inside of the plastic tube, once the refrigeration thereof has been completed, connecting the inside of said plastic tube with the atmosphere, or with an accumulating tank.
- Application of a lubricating fluid with is pressure injected to achieve the quick and efficient removal of the plastic tube, that insertion or pressure injection of the lubricating fluid producing a cushioning effect between the mould and the actual plastic tube, in order to reduce the force of removal.

### DESCRIPTION OF THE DRAWINGS

In order to complete the description being carried out and with the purpose of helping towards a better understanding of the characteristics of the invention, in accordance with a preferred example of practical embodiment thereof, a single sheet of plans is attached as an integral part of said description, wherein, in an illustrative and non-limitative character, a longitudinal cross-sectional view of the equipment for the production of molecularly bioriented tubular profiles, and based thereon has been made the corresponding method, has been represented:

### PREFERRED EMBODIMENT OF THE INVETION

As can be observed in the above-referenced figure, the equipment of the invention comprises a mould (1) mounted on a support (2) with characteristics which make it possible to rotate and tilt the mould (1), this being externally equipped with a plurality of heating elements (3), while at its ends incorporates asymmetric heads (4) equipped with a vacuum take-off orifice (5), the purpose whereof to be explained below.

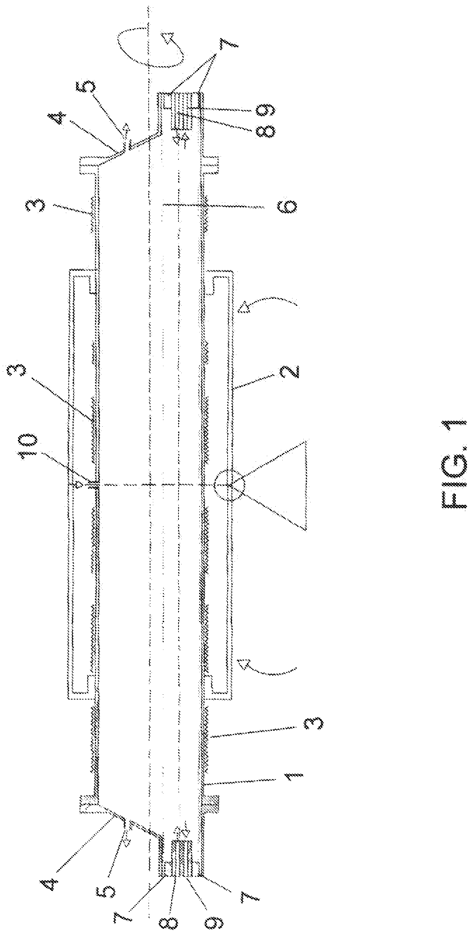

The corresponding plastic tube (6) to be shaped is inserted through one of the ends of the mould (1) prior to removing the corresponding head (4), the insertion whereof being made until said plastic tube (6) reaches the head of the opposite end, to subsequently mount that head (4) of the end wherethrough the tube (6) has been inserted and actuate the corresponding fastening means (7) of the actual tube (6) inside the mould (1), that plastic rube (6) resting in correspondence with the lower generatrix of the actual mould (1), as represented in the figure. The asymmetric heads (4) permit the pre-heated and, therefore, soft, tube (6) to always be supported and enter straight, facilitating the grip thereof at the ends through the fastening means (7).

In correspondence with the fastening means (7) of the plastic tube (6), an inlet (8) for the expander and refrigerator fluid has been provided, and an outlet (9) of said fluid, while radially to the wall of the actual mould (1) an orifice (10) has been provided for the entrance of lubricating fluid used in the removal of the tube (6) once the inside of the mould (1) has been shaped, carrying out the process by means of an initial vacuum, through the orifice (5) which is established in the limited enclosure between the inside of the mould (1) and the exterior of the plastic tube (6). By making the vacuum, we achieve a perfect shaping, as if there was any water or air, it would prevent the plastic from consistently sticking to the walls of the mould.

Next, the expander fluid is applied at the same temperature as the pro forma and the mould, through the inlet (8) to produce the expansion of the tube (6), and once expanded, and maintaining the pressure inside by means of regulation systems, a refrigerating fluid is applied to the actual tube (6), also through the inlet (8), permitting the leakage and pull of the expander fluid on the opposite side or on the same inlet side, through the outlet (9), permitting the continuous flow of said fluid and the direct interaction thereof against the inner walls of the plastic tube (6).

Simultaneously to that refrigeration, the mould (1) can make oscillating and/or rotating movements as it is mounted on the support (2) equipped with those movements, thereby ensuring a correct distribution of the temperature in the inside thereof.

After carrying out a depressurization and/or emptying of the inside of the plastic tube (6) after the refrigeration thereof, pressurised lubricating fluid is applied through the lateral orifice (10), this fluid extending between the mould (1) and the tube (6) and, due to cushioning effect, the extraction forces will be reduced by a high degree, with the special feature that that lubricating fluid must be at the same temperature as the mould (1) in order to prevent changes of temperature.

As has been mentioned previously, based on this equipment and method, and by virtue of the double head (4) of the mould (1), it is possible to remove an already shaped plastic tube (6), at the same time that the next tube to be shape is inserted at the opposite end, which reduces the execution time and, definitively, the costs, to which the simplicity of the equipment based on the mould (1) contributes, with the elements and means associated thereto.

## Claims

1. Equipment for producing molecularly bioriented tubular profiles, which is constituted from a mould (1), being adapted for inserting a corresponding plastic tube (6) as tubular profile to be shaped, wherein said mould (1) features asymmetric heads (4) at the ends thereof, allowing insertion of the plastic tube (6) inside the already hot mould (1) and at the same temperature as the inside of the mould (1), which is heated by means of heating elements (3) disposed externally thereto, with the special feature that the heads (4) include fastening means (7) for the plastic tube (6) once inserted inside the mould (1), and an inlet for the application of expander fluid and refrigerating fluid inside said plastic tube (6), as well as an outlet (9) for said fluids, additionally incorporating a lateral orifice (10) as inlet in the application of a lubricating fluid which facilitates the removal of the tube (6) once it has been shaped, **characterised in that** the mould (1) is mounted on a support (2) which can tilt and rotate to ensure a correct distribution of the temperatures inside the mould during the refrigeration process of the tube (6) to be shaped and **in that** the plastic tube (6) to be shaped, on the insertion thereof into the mould (1), rests on the lower generatrix thereof, establishing an enclosure between the inside of the mould (1) and the exterior of the plastic tube (6), a vacuum being applicable to the enclosure whereof, before the application of the expander fluid of the actual plastic tube (6), through the inlet (8) established in the end heads (4).

2. Method of using an equipment for producing molecularly bioriented tubular profiles, which use the mould which forms part of the equipment of the claim 1, wherein the method consists of the following operative steps:
- After heating the mould (1) at a specific temperature, the plastic tube (6) is inserted at the same temperature as that of the heated mould (1), making the insertion through one of the ends of said mould (1);
- Closure of that insertion end of the plastic tube (6) by means of the corresponding end head (4) and simultaneous actuation of the fastening means (7) of the actual tube (6) inside the mould (1);
- Execution of the vacuum in the enclosure between the interior of the mould (1) and the exterior of the plastic tube (6);
- Application by means of pumping or pressurised tank, of expander fluid through an inlet (8) established on the heads (4), to produce the expansion of the plastic tube (6) and where the expander fluid which is inserted at the inlet (8) is at the same temperature as the actual plastic tube (6), producing the expansion thereof against the walls of the mould (1);
- Application, through the same inlet (8) of the heads (4), of a refrigerating fluid inside the plastic tube (6), and simultaneous evacuation of this fluid through the outlet (9) of the head (4) to achieve a continuous flow of said fluid and the direct interaction thereof against the inner walls of the expanded plastic tube (6);
- Rotation and tilting of the mould (1), simultaneous to the refrigeration process of the plastic tube (6), to ensure a correct distribution of the temperature in the interior thereof;
- Depressurization and/or emptying of the inside of the plastic tube (6), by means of connecting the inside of said plastic tube with the atmosphere;
- Application through a lateral inlet orifice (10) provided in the mould (1), of a pressurised lubricating fluid, which extends between the mould (1) and the expanded plastic tube (6), in order to establish a cushioning effect which reduces the force of removal of said plastic tube (6) once it has been shaped.

3. Method according to claim 2, **characterised in that** simultaneous to the removal of the shaped plastic tube (6), through one of the ends of the mould (1), a new plastic tube (6) to be shaped is inserted.

## Patentansprüche

1. Einrichtung zur Herstellung von molekular bioorientierten röhrenförmigen Profilen, die aus einer Form (1) gebildet ist, die zum Einführen eines entsprechenden Kunststoffrohres (6) als zu formendes röhrenförmiges Profil ausgelegt ist, wobei die Form (1) asymmetrische Köpfe (4) an den Enden davon aufweist, die das Einführen des Kunststoffrohrs (6) in die bereits heiße Form (1) und bei der gleichen Temperatur wie die Innenseite der Form (1) ermöglichen, die mittels Heizelementen (3) erwärmt wird, die außerhalb davon angeordnet sind, mit dem besonderen Merkmal, dass die Köpfe (4) Befestigungsmittel (7) für das Kunststoffrohr (6), sobald es in die Form (1) eingeführt ist, und einen Einlass zum Aufbringen von Expanderflüssigkeit und Kühlflüssigkeit in das Kunststoffrohr (6) sowie einen Auslass (9) für die Flüssigkeiten aufweisen, der zusätzlich eine seitliche Öffnung (10) als Einlass beim Aufbringen einer Schmierflüssigkeit aufnehmen, die die Entnahme des Rohrs (6) erleichtert, sobald dieses geformt wurde, **dadurch gekennzeichnet, dass** die Form (1) auf einem Träger (2) gelagert ist, der kipp- und drehbar ist, um eine korrekte Verteilung der Temperaturen innerhalb der Form während des Kühlprozesses des zu formenden Rohres (6) und des Kunststoffes zu gewährleisten, und dadurch, dass das zu formende Rohr (6) beim Einführen in die Form (1) auf der unteren Mantellinie davon aufliegt, sodass eine Umhüllung zwischen der Innenseite der Form (1) und der Außenseite des Kunststoffrohrs (6) gebildet wird, wobei vor dem Aufbringen der Expanderflüssigkeit des eigentlichen Kunststoffrohrs (6) durch den in den Endköpfen (4) ausgebildeten Einlass (8) ein Vakuum an die Umhüllung anlegbar ist.

2. Verfahren zur Verwendung einer Einrichtung zur Herstellung von molekular bioorientierten röhrenförmigen Profilen unter Verwendung der Form, die Teil der Einrichtung nach Anspruch 1 ist, wobei das Verfahren aus den folgenden Arbeitsschritten besteht:
- Nach Erwärmen der Form (1) auf eine bestimmte Temperatur wird das Kunststoffrohr (6) mit der gleichen Temperatur wie die der erwärmten Form (1) eingeführt, wobei das Einführen durch eines der Enden der Form (1) erfolgt;
- Verschließen dieses Einführendes des Kunststoffrohres (6) mittels des entsprechenden Endkopfes (4) und gleichzeitige Betätigung der Befestigungsmittel (7) des eigentlichen Rohrs (6) innerhalb der Form (1);
- Ausführung des Vakuums in der Umhüllung zwischen der Innenseite der Form (1) und der Außenseite des Kunststoffrohrs (6);
- Aufbringen von Expanderflüssigkeit mittels Pumpen oder Druckbehälter durch einen an den Köpfen (4) ausgebildeten Einlass (8), um die Ausdehnung des Kunststoffrohrs (6) zu bewirken, und wobei die Expanderflüssigkeit, die am Einlass (8) eingeführt wird, die gleiche Temperatur wie das eigentliche Kunststoffrohr (6) aufweist, sodass die Ausdehnung davon gegen die Wände der Form (1) bewirkt wird;
- Aufbringen einer Kühlflüssigkeit innerhalb des Kunststoffrohrs (6) durch den gleichen Einlass (8) der Köpfe (4) und gleichzeitiges Abführen dieser Flüssigkeit durch den Auslass (9) des Kopfes (4), um einen kontinuierlichen Fluss des Fluids und die direkte Wechselwirkung davon gegen die Innenwände des expandierten Kunststoffrohrs (6) zu erzielen;
- Drehen und Kippen der Form (1) gleichzeitig mit dem Kühlprozess des Kunststoffrohrs (6), um eine korrekte Verteilung der Temperatur in Inneren davon zu gewährleisten;
- Unterdrucksetzen und/oder Entleeren der Innenseite des Kunststoffrohrs (6) durch Verbinden der Innenseite des Kunststoffrohrs mit der Atmosphäre;
- Aufbringen einer unter Druck stehenden Schmierflüssigkeit, die sich zwischen der Form (1) und dem expandierten Kunststoffrohr (6) erstreckt, durch eine in der Form (1) bereitgestellte seitliche Einlassöffnung (10), um eine Dämpfungswirkung zu bewirken, die die Kraft zur Entnahme des Kunststoffrohrs (6) reduziert, sobald es geformt wurde.

3. Verfahren nach Anspruch 2, **dadurch gekennzeichnet, dass** gleichzeitig mit der Entnahme des geformten Kunststoffrohrs (6) durch eines der Enden der Form (1) ein neues zu formendes Kunststoffrohr (6) eingeführt wird.

## Revendications

1. Équipement pour la production de profilés tubulaires à bio-orientation moléculaire, qui est constitué d'un moule (1), étant adapté pour l'insertion d'un tube en plastique correspondant (6) en tant que profilé tubulaire à former, dans lequel ledit moule (1) présente des têtes asymétriques (4) à ses extrémités, permettant l'insertion du tube en plastique (6) à l'intérieur du moule déjà chaud (1) et à la même température que l'intérieur du moule (1), qui est chauffé au moyen d'éléments chauffants (3) disposés à l'extérieur de celui-ci, avec la particularité que les têtes (4) comportent des moyens de fixation (7) pour le tube en plastique (6) une fois inséré dans le moule (1), et une entrée pour l'application de fluide expanseur et de fluide réfrigérant à l'intérieur dudit tube en plastique (6), ainsi qu'une sortie (9) pour lesdits fluides, incorporant en outre un orifice latéral (10) comme entrée dans l'application d'un fluide lubrifiant qui facilite le retrait du tube (6) une fois celui-ci formé, **caractérisé en ce que** le moule (1) est monté sur un support (2) qui peut s'incliner et tourner pour assurer une bonne répartition des températures à l'intérieur du moule pendant le processus de réfrigération du tube (6) à former et **en ce que** le tube en plastique (6) à former, lors de son insertion dans le moule (1), repose sur sa génératrice inférieure, établissant une enceinte entre l'intérieur du moule (1) et l'extérieur du tube en plastique (6), enceinte à laquelle un vide est applicable, avant l'application du fluide expanseur du propre tube en plastique (6), à travers l'entrée (8) établie dans les têtes d'extrémité (4).

2. Procédé d'utilisation d'un équipement de production de profils tubulaires à bio-orientation moléculaire, qui utilisent le moule qui fait partie de l'équipement de la revendication 1, dans lequel le procédé consiste en les étapes opérationnelles suivantes :
- Après avoir chauffé le moule (1) à une température déterminée, le tube en plastique (6) est inséré à la même température que celle du moule chauffé (1), effectuant l'insertion à travers l'une des extrémités dudit moule (1) ;
- Fermeture de cette extrémité d'insertion du tube en plastique (6) au moyen de la tête d'extrémité correspondante (4) et actionnement simultané des moyens de fixation (7) du propre tube (6) à l'intérieur du moule (1) ;
- Exécution du vide dans l'enceinte entre l'intérieur du moule (1) et l'extérieur du tube en plastique (6) ;
- Application au moyen d'un réservoir de pompage ou sous pression, de fluide expanseur à travers une entrée (8) établie sur les têtes (4), pour produire l'expansion du tube en plastique (6) et où le fluide expanseur qui est inséré à l'entrée (8) est à la même température que le propre tube en plastique (6), produisant son expansion contre les parois du moule (1) ;
- Application, à travers la même entrée (8) des têtes (4), d'un fluide réfrigérant à l'intérieur du tube en plastique (6), et évacuation simultanée de ce fluide à travers la sortie (9) de la tête (4) pour obtenir un écoulement continu dudit fluide et son interaction directe contre les parois internes du tube en plastique expansé (6) ;
- Rotation et inclinaison du moule (1), simultanément au processus de réfrigération du tube en plastique (6), pour assurer une bonne répartition de la température à l'intérieur de celui-ci ;
- Dépressurisation et/ou vidange de l'intérieur du tube en plastique (6), en connectant l'intérieur dudit tube en plastique à l'atmosphère ;
- Application à travers un orifice d'entrée latéral (10) prévu dans le moule (1), d'un fluide lubrifiant sous pression, qui s'étend entre le moule (1) et le tube en plastique expansé (6), afin d'établir un effet d'amortissement qui réduit la force de retrait dudit tube en plastique (6) une fois celui-ci formé.

3. Procédé selon la revendication 2, **caractérisé en ce que** simultanément au retrait du tube en plastique formé (6), à travers l'une des extrémités du moule (1), un nouveau tube en plastique (6) à former est inséré.
